# EUROPÄISCHE PATENTSCHRIFT

(11) **EP 0 299 405 B1**
(45) Veröffentlichungstag und Bekanntmachung des Hinweises auf die Patenterteilung: **26.05.1993**
(21) Anmeldenummer: 88111043.1
(22) Anmeldetag: 11.07.1988
(51) Int. Cl.: H02M 3/335

(54) **Schaltnetzteil**
Switching power supply
Alimentation à découpage

(30) Priorität: 16.07.1987 DE 3723484
(43) Veröffentlichungstag der Anmeldung: 18.01.1989
(73) Patentinhaber: Deutsche Thomson-Brandt GmbH, 78003 Villingen-Schwenningen (DE)
(72) Erfinder: Rilly, Gerard, Dr., D-7731 Unterkirnach (DE); Rodriguez, José-Ignacio, Dipl.-Ing., D-7730 VS-Villingen (DE)

(56) Entgegenhaltungen:
- EP-A- 0 024 661
- EP-A- 0 203 419
- WO-A-86/02220
- GB-A- 2 158 613

## Beschreibung

Bei einem bekannten Schaltnetzteil wird aus der Impulsspannung am Übertrager oder aus der sekundärseitig erzeugten Betriebsspannung eine Regelspannung gewonnen. Diese steuert eine auf der Primärseite vorgesehene Steuerschaltung für den Schalttransistor im Sinne einer Pulsweitenmodulation derart, daß die den Schalttransistor leitend steuernden Impulse moduliert und die auf der Sekundärseite erzeugten Betriebsspannungen stabilisiert werden.

Es ist auch bekannt, auf der Sekundärseite aus einer Betriebsspannung eine Regelspannung zu gewinnen, diese in eine mit der Regelspannung amplitudenmodulierte Impulsspannung umzuwandeln, über einen Übertrager auf die Primärseite zu übertragen, dort mit einem Gleichrichter wieder in eine Regelspannung umzuwandeln und dann der Steuerklemme der Steuerschaltung zuzuführen.

Wenn eine derartige Regelschaltung ausfällt, z.B. durch eine Leiterunterbrechung oder ein fehlerhaftes Bauteil, besteht die Gefahr, daß der primärseitig vorgesehene Schalttransistor zu lange leitend gesteuert wird und auf der Sekundärseite Überspannungen entstehen.

Der Erfindung liegt die Aufgabe zugrunde, für ein Schaltnetzteil der zuletzt beschriebenen Art auf einfache Weise einen sicheren Schutz bei Ausfall der von der Sekundärseite ausgehenden Regelung zu schaffen. Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird also bei Ausfall der auf der Primärseite wirksamen Regelspannung an der Steuerklemme der Steuerschaltung zwangsläufig auf eine zweite Regelspannung umgeschaltet, die in einer gesonderten primärseitigen Schaltung gewonnen ist. Diese primärseitige Regelschaltung ist so bemessen, daß sie die sekundärseitig erzeugten Betriebsspannungen auf bis zu 10 % heruntergesetzte Werte, also Werte unterhalb des Nennwertes einregelt. Unabhängig davon, aus welchem Grunde die von der Sekundärseite abgeleitete Regelspannung an der Steuerklemme der Steuerschaltung ausfällt, wird also ein sicherer Schutz geschaffen, indem die im Normalbetrieb nicht wirksame primärseitige Regelung bei Ausfall der sekundärseitigen Regelung die Regelung des Schalttransistors übernimmt.

Es ist auch ein Schaltnetzteil bekannt (EP-A-024661), bei dem ein erster Referenzspannungsgenerator eine Steuerschaltung für den eigentlichen Wandlerblock steuert. Dabei ist eine Schutzschaltung mit einem Komparator vorgesehen, der die stabilisierte Ausgangsspannung des Wandlers mit einer Spannung von einem zweiten Referenzspannungsgenerator vergleicht.

Es ist auch ein Regelsystem bekannt (GB-A-2158613), bei dem ein von einer Hauptsteuerschaltung gesteuertes Gerät auch dann ein Steuersignal bekommt, wenn eine Hilfsschaltung für die Hauptsteuerschaltung ausfällt.

Es ist ferner ein Schaltnetzteil bekannt (EP-A-203419), bei dem zur Erzielung eines Überspannungsschutzes im Störungsfall der geregelte Sekundärkreis auf eine Ausgangsspannung geregelt wird, die gegenüber der geregelten Ausgangsspannung im normalen Betriebszustand niedriger ist.

Durch die WO-A-86 02220 ist auch ein Schaltnetzteil für Fernsehgeräte bekannt, das eine Schutzschaltung gegen Überlastung auf der Primärseite sowie eine sekundärseitige Regelschaltung und Anlaufschaltung mit Endabschaltung des Netzteils aufweist. Die bei Störungen primärseitig ansprechende Schutzschaltung verursacht einen sekundärseitigen negativen Spannungssprung. Dieser wird mit einer vom Schaltnetzteil unabhängig erzeugten Sekundärspannung in einem Komparator verglichen, der eine Steuerspannung liefert, auf die die sekundärseitige Schutzschaltung anspricht, die die Ansteuerung des Schalters im Netzteil unterbricht.

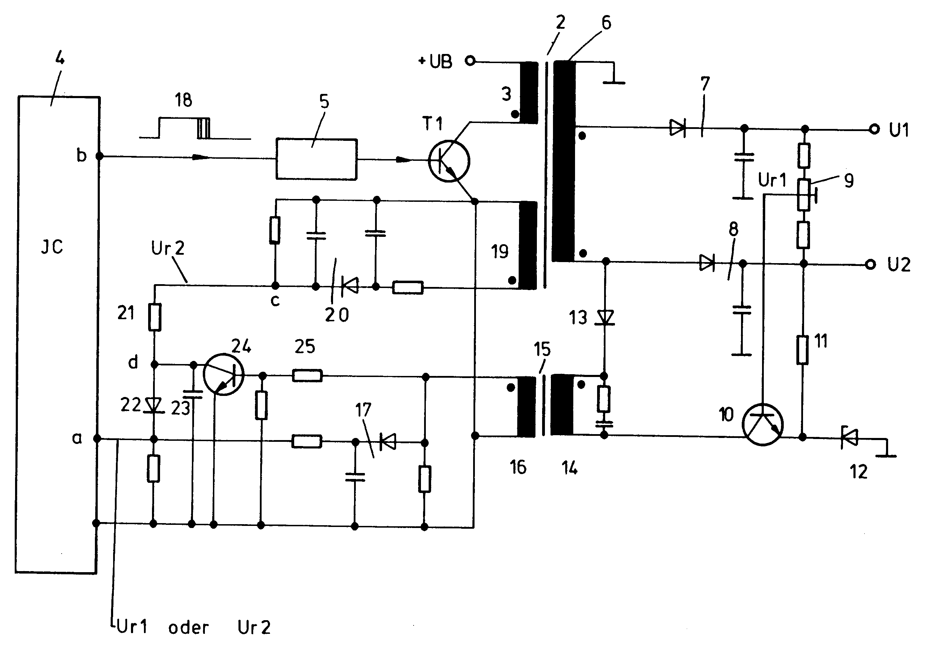

Die Erfindung wird anhand der Zeichnung an einem Ausführungsbeispiel erläutert.

Die Figur zeigt in vereinfachter Form ein Schaltnetzteil mit dem primärseitigen Schalttransistor T1, dem Übertrager 2, der Arbeitswicklung 3, der als IC ausgebildeten Steuerschaltung 4 und dem Treiber 5 für den Schalttransistor T1. Auf der Sekundärseite des Übertragers 2 werden mit der Sekundärwicklung 6 und den beiden Gleichrichterschaltungen 7,8 zwei Betriebsspannungen U1,U2 erzeugt. Von dem Potentiometer 9 wird eine zu U1 proportionale Regelspannung Ur1 abgenommen und der Basis des Transistors 10 zugeführt. Der Transistor 10 erhält an seinem Emitter eine mit dem Widerstand 11 und der Zenerdiode 12 gewonnene Referenzspannung von 5,6 V. Dem Kollektor des Transistors 10 werden über die Diode 13 Impulse von der Wicklung 6 zugeführt. Der Transistor 10 wirkt dadurch als Modulator, der mit Ur1 amplitudenmodulierte Impulse an die Wicklung 14 des Übertragers 15 liefert. Diese mit Ur1 modulierten Impulse werden von der Wicklung 16 des Übertragers 15 abgenommen und mit der Gleichrichterschaltung 17 wieder in die Regelspannung Ur1 umgewandelt. Diese gelangt auf die Klemme a der Steuerschaltung 4 und bewirkt dort eine Breitenmodulation der von der Steuerschaltung 4 dem Transistor T1 zugeführten Impulse 18. Entsprechend der Höhe der Regelspannung Ur1 am Potentiometer 9 werden die Breite der Impulse 18, die Einschaltdauer von T1 und somit die Amplitude von U1,U2 so geregelt, daß die Betriebsspannungen U1 und U2 stabilisiert werden.

Die Primärseite enthält außerdem die Regelwicklung 19, die über die Gleichrichterschaltung 20 an den Punkt c die zweite Regelspannung Ur2 liefert, die ebenfalls von der Amplitude der Impulsspannung am Übertrager 2 abhängig ist. Ur2 gelangt über den Widerstand 21 und die Diode 22 auf den Punkt a. Durch Ur2 wird der Kondensator in positiver Richtung aufgeladen. Parallel zu dem Kondensator 23 liegt der Transistor 24, an dessen Basis die Impulsspannung von der Wicklung 16 über den Widerstand 25 angelegt ist. Der Transistor 24 wird daher periodisch mit der Impulsfrequenz der Schaltung leitend gesteuert und bewirkt eine Entladung des Kondensators 23. Die Schaltung ist so bemessen, daß der Spannungswert am Punkt d während der Aufladung des Kondensators 23 bis zum Beginn seiner Entladung über den Transistor 24 nur solche Werte erreicht, bei denen die Diode 22 gesperrt bleibt. Die Punkte d und a bleiben dadurch voneinander getrennt, so daß die Regelspannung Ur2 keinen Einfluß auf den Punkt a ausübt und die Regelung nur mit Ur1 erfolgt.

Wenn durch einen Fehler in der Schaltung die Impulsspannung am Übertrager 2 ausfällt oder gefährlich kleine Werte annimmt und somit die Regelung mit Ur1 nicht mehr oder nicht mehr einwandfrei arbeitet, wird der Transistor 24 nicht mehr leitend gesteuert. Der Kondensator 23 wird jetzt durch Ur2 so weit positiv aufgeladen, daß die Diode 22 leitend wird. Jetzt sind die Punkte d und a miteinander verbunden, so daß die Regelspannung Ur2 anstelle der nicht mehr vorhandenen Regelspannung Ur1 am Punkt a wirksam wird und in der beschriebenen Weise die Regelung übernimmt. Die gesamte Schaltung arbeitet jetzt im sogenannten Notfall mit der primärseitigen Regelschaltung 19,20,21,22 und sorgt dafür, daß die Betriebsspannungen U1 und U2 keine unzulässig hohen Werte annehmen können. Die primärseitige Regelschaltung ist darüberhinaus so bemessen, daß die Betriebsspannungen U1 und U2 auf einen herabgesetzten, also unterhalb des Nennwertes liegenden Wert geregelt werden.Die herabgesetzten Werte von U1 und U2 liegen etwa 0 - 10% unter den Nennwerten bei wirksamer Ur1, also Normalbetrieb. Bei einer stärkeren Herabsetzung besteht die Gefahr, daß in unerwünschter Weise die Schaltung stationär im Notfallbetrieb mit Ur2 verbleibt und nicht selbsttätig wieder in den Normalbetrieb mit Ur1 übergeht. Die angestiegene Spannung am Punkt d kann einen Indikator für diesen Zustand betätigen, z.B. eine LED einschalten, als Indiz, daß eine Störung vorliegt und das gesamte Schaltnetzteil auf die primärseitige Regelung umgeschaltet hat.

Grundsätzlich kann die Umschaltung auf die primärseitige Regelung auch mit einem Schalter erfolgen, der zwischen den Punkten c und a liegt, durch die Regelspannung Ur1 gesperrt bleibt und bei Ausfall dieser Regelspannung selbsttätig geöffnet wird und Ur2 auf den Punkt a schaltet.

## Patentansprüche

1. Schaltnetzteil mit einem Übertrager (2), auf dessen Sekundärseite eine Regelspannung (Ur1) gewonnen, auf die Primärseite übertragen wird und dort zur Stabilisierung der auf der Sekundärseite erzeugten Betriebsspannungen (U1, U2) an eine Steuerklemme (a) einer Steuerschaltung (4) für den in Reihe mit der Primärwicklung (3) liegenden Schalttransistor (T1) angelegt ist, dadurch gekennzeichnet, daß der Übertragungsweg der Regelspannung (Ur1) auf der Primärseite an den Steuereingang einer Schaltstufe (22 - 24) angelegt ist, die zwischen der Steuerklemme (a) der Steuerschaltung (4) und einer Klemme (c) mit einer auf der Primärseite erzeugten zweiten Regelspannung (Ur2) liegt, die bei Ausfall der ersten Regelspannung (Ur1) über die wirksam gesteuerte Schaltstufe (22 - 24) auf die Steuerklemme (a) der Steuerschaltung (4) gelangt und die Betriebsspannungen (U1, U2) auf herabgesetzte Werte regelt.

2. Netzteil nach Anspruch 1, dadurch gekennzeichnet, daß die auf der Sekundärseite gewonnene Regelspannung (Ur1) in einem Modulator (10 - 12) in eine Impulsspannung umgewandelt, diese über einen Zusatzübertrager (15) auf die Primärseite übertragen und dort wieder gleichgerichtet wird (17).

3. Netzteil nach Anspruch 2, dadurch gekennzeichnet, daß die zu modulierende Impulsspannung von einer Sekundärwicklung (6) des Schaltnetzteil-Übertragers (2) abgeleitet ist.

4. Netzteil nach Anspruch 1, dadurch gekennzeichnet, daß ein die zweite Regelspannung führender Schaltungspunkt (c,d) über eine bei Normalbetrieb gesperrte Diode (22) mit der Steuerklemme (a) verbunden ist.

5. Netzteil nach Anspruch 2 und 4, dadurch gekennzeichnet, daß der Schaltungspunkt (c,d) über die Parallelschaltung eines Kondensators (23) und eines Transistors (24) geerdet ist, an dessen Basis die Impulsspannung von der primärseitigen Wicklung (16) des Zusatzübertragers (15) angelegt ist.

6. Netzteil nach Anspruch 1, dadurch gekennzeichnet, daß die herabgesetzten Werte um bis zu 10% unterhalb der Nennwerte liegen.

7. Netzteil nach Anspruch 1, dadurch gekennzeichnet, daß ein Indikator (LED) für den Betriebszustand mit der zweiten Regelspannung (Ur2) vorgesehen ist.

## Claims

1. Switched-mode power supply unit with a transformer (2), its secondary side generating a control voltage (Ur1) that is transmitted to the primary side, where in order to stabilize the operating voltages (U1, U2) generated on the secondary side it is applied to a control terminal (a) of a control circuit (4) for the switching transistor (T1), which is connected in series with the primary winding (3), characterized in that on the primary side, the transmission path of the control voltage (Ur1) is connected to the control input connection of a switching stage (22 - 24) which is connected between the control terminal (a) of the control circuit (4) and a terminal (c) carrying a second control voltage (Ur2), which is generated on the primary side, which in the event of failure of the first control voltage (Ur1) reaches the control terminal (a) of the control circuit (4) via the control-activated switching stage (22 - 24), and which regulates the operating voltages (U1, U2) to reduced values.

2. Power supply unit according to Claim 1, characterized in that the control voltage (Ur1) generated on the secondary side is converted to a pulse voltage in a modulator (10 - 12), and this pulse voltage is transmitted, via a supplementary transformer (15), to the primary side, where it is converted back by rectification (17).

3. Power supply unit according to Claim 2, characterized in that the pulse voltage to be modulated is derived from a secondary winding (6) of the switched-mode power supply unit transformer (2).

4. Power supply unit according to Claim 1, characterized in that a circuit point (c, d) carrying the second control voltage is connected to the control terminal (a) via a diode (22) which is non-conducting during normal operation.

5. Power supply unit according to Claims 2 and 4, characterized in that the circuit point (c, d) is connected to ground via the parallel connection of a capacitor (23) and a transistor (24), and the pulse voltage from the primary-side winding (16) of the supplementary transformer (15) is applied to the base of said transistor.

6. Power supply unit according to Claim 1, characterized in that the reduced values are up to 10% lower than the rated values.

7. Power supply unit according to Claim 1, characterized in that an indicator (LED) is provided for the operating condition with the second control voltage (Ur2).

## Revendications

1. Bloc d'alimentation et de commutation avec un transformateur (2) sur le côté secondaire duquel on obtient une tension de réglage (Ur1) qui est transférée au primaire et qui y est appliquée, pour stabiliser les tensions de fonctionnement (U1, U2) produites sur le secondaire, à une borne de commande (a) d'un circuit de commande (4) pour le transistor de commutation (T1) qui est couplé en série avec l'enroulement primaire (3), **caractérisé en ce** que le trajet de transmission de la tension de réglage (Ur1) sur le primaire est appliqué à l'entrée de commande d'un étage de commutation (22-24) qui se trouve entre la borne de commande (a) du circuit de commande (4) et une borne (c) avec une seconde tension de réglage (Ur2) produite sur le primaire qui, en cas de défaillance de la première tension de réglage (Ur1), arrive à la borne de commande (a) du circuit de commande (4) par l'étage de commutation commandé en étant efficace (22-24) et qui règle les tensions de fonctionnement (U1, U2) à des valeurs diminuées.

2. Bloc d'alimentation selon la revendication 1, **caractérisé en ce** que la tension de réglage (Ur1) obtenue sur le secondaire est transformée dans un modulateur (10-12) en une tension d'impulsion, que celle-ci est transférée au primaire par un transformateur supplémentaire (15) et qu'elle y est redressée à nouveau (17).

3. Bloc d'alimentation selon la revendication 2, **caractérisé en ce** que la tension d'impulsion à moduler est dérivée par un enroulement secondaire (6) du transformateur (2) du bloc d'alimentation et de commutation.

4. Bloc d'alimentation selon la revendication 1, **caractérisé en ce** qu'un point de commutation (c, d) qui conduit la seconde tension de réglage est relié à la borne de commande (a) par une diode (22) bloquée en fonctionnement normal.

5. Bloc d'alimentation selon la revendication 2 et 4, **caractérisé en ce** que le point de commutation (c, d) est mis à la terre par le montage en parallèle d'un condensateur (23) et d'un transistor (24) à la base duquel la tension d'impulsion de l'enroulement côté primaire (16) du transformateur supplémentaire (15) est appliquée.

6. Bloc d'alimentation selon la revendication 1, **caractérisé en ce** que les valeurs réduites se situent jusqu'à 10 % au-dessous des valeurs nominales.

7. Bloc d'alimentation selon la revendication 1, **caractérisé en ce** qu'un indicateur (diode électroluminescente) est prévu pour l'état de fonctionnement avec la seconde tension de réglage (Ur2).
